# EUROPEAN PATENT APPLICATION

(11) **EP 4 322 129 A1**
(43) Date of publication of application: **14.02.2024**
(21) Application number: 21944020.3
(22) Date of filing: 31.05.2021
(51) Int. Cl.: G08G 1/08, G06Q 50/30, G06F 16/909

(54) **INFORMATION MANAGEMENT DEVICE, INFORMATION MANAGEMENT METHOD, AND STORAGE MEDIUM**

(71) Applicant: NEC Corporation, 108-8001 Tokyo (JP)
(72) Inventor: SUGAWARA, Chisato, Tokyo 108-8001 (JP); JUMONJI, Nana, Tokyo 108-8001 (JP); KIMURA, Yosuke, Tokyo 108-8001 (JP); HASEGAWA, Maiko, Tokyo 108-8001 (JP)
(74) Representative: Vossius & Partner Patentanwälte Rechtsanwälte mbB
(86) International application number: PCT/JP2021/020662
(87) International publication number: WO 2022/254510

(57) **Abstract**

In the present invention, reports on dangerous driving from a resident or the like are efficiently managed in driving situation management. A report information storage unit 104 stores report information in which details of a report indicating a dangerous driving situation are associated with position information that includes a dangerous driving occurrence range candidate indicating an approximate range regarding the position of occurrence of the dangerous driving situation and/or a dangerous driving occurrence range indicating a range where the dangerous driving occurrence range candidate has been identified. A search processing unit 101 searches the report information storage unit 104 for the report information in which position information is included in a search range to be searched. A display processing unit 103 outputs a search result.

## Description

### Technical Field

The present disclosure relates to an information management device and the like that manage a report regarding a driving situation such as dangerous driving.

### Background Art

In business entities (for example, a carrier, a construction contractor/construction company, a local government, a police department, a fire department, and the like) that perform operations requiring driving of a vehicle or the like, for example, introduction of a system for managing a driving situation of a vehicle driver by a drive recorder (hereinafter, also referred to as a "drive recorder") as disclosed in Patent Literature 1 is increasing. In such a business entity, when information (complaint or the like) regarding a dangerous driving situation (hereinafter, also referred to as dangerous driving) of a vehicle is reported from a resident or the like, a person in charge of the business entity identifies the vehicle with the reported dangerous driving based on a reported position and date and time, checks an image during driving and data such as acceleration recorded by a drive recorder, and then instructs the driver of the identified vehicle.

### Citation List

### Patent Literature

PTL 1: JP 2007-141212 A

### Summary of Invention

### Technical Problem

Reports concerning dangerous driving sent from residents and the like are often ambiguous in terms of both position and date and time. Therefore, a person in charge who has received a report considers which position on a map to register in consideration of a complaint amount, details, a date and time, and the like for each piece of information (complaint and the like) regarding the reported dangerous driving.

An object of the present disclosure is to provide an information management device and the like that efficiently manage a report from a resident or the like regarding dangerous driving in driving condition management.

### Solution to Problem

An information management device according to an aspect of the present disclosure includes storage means configured to store report information in which details of a report indicating a dangerous driving situation are associated with position information including at least one of a dangerous driving occurrence range candidate indicating an approximate range of a position where the dangerous driving situation occurred and a dangerous driving occurrence range indicating a range in which the dangerous driving occurrence range candidate has been identified, search processing means configured to search the storage means for report information including the position information in a search range indicating a predetermined range as a search target, and display processing means configured to output a search result.

An information management method according to an aspect of the present disclosure includes storing report information in which details of a report indicating a dangerous driving situation are associated with position information including at least one of a dangerous driving occurrence range candidate indicating an approximate range of a position where the dangerous driving situation occurred and a dangerous driving occurrence range indicating a range in which the dangerous driving occurrence range candidate has been identified, searching for report information including the position information in a search range indicating a predetermined range as a search target, and outputting a search result.

A recording medium according to an aspect of the present disclosure stores a program for causing a computer to execute storing report information in which details of a report indicating a dangerous driving situation are associated with position information including at least one of a dangerous driving occurrence range candidate indicating an approximate range of a position where the dangerous driving situation occurred and a dangerous driving occurrence range indicating a range in which the dangerous driving occurrence range candidate has been identified, searching for report information including the position information in a search range indicating a predetermined range as a search target, and outputting a search result.

### Advantageous Effects of Invention

According to the information management device of the present disclosure, it is possible to efficiently manage reports from residents and the like regarding dangerous driving in driving situation management. Brief Description of Drawings

[Fig. 1] Fig. 1 is a diagram illustrating an outline of an information management system according to a first example embodiment.
[Fig. 2] Fig. 2 is a block diagram illustrating a configuration example of an information management device 10 according to the first example embodiment.
[Fig. 3] Fig. 3 is a diagram illustrating an example of sensor information in the first example embodiment.
[Fig. 4] Fig. 4 is a diagram illustrating an example of report information in the first example embodiment.
[Fig. 5] Fig. 5 is a diagram illustrating an example of dangerous driving information in the first example embodiment.
[Fig. 6] Fig. 6 is a flowchart illustrating an example of an operation for a search process in the first example embodiment.
[Fig. 7] Fig. 7 is a diagram illustrating an example of setting a position search range near a position Px in the first example embodiment.
[Fig. 8] Fig. 8 is a diagram illustrating an example of a position search range of the position Px in a certain time search range and report information near the position Px in the first example embodiment.
[Fig. 9] Fig. 9 is a diagram illustrating an example of a search result searched in a search range of the position Px in the first example embodiment.
[Fig. 10] Fig. 10 is a flowchart illustrating an example of an operation for a registration process in the first example embodiment.
[Fig. 11] Fig. 11 is a diagram illustrating an example of setting a search range of a reported position P4 in the first example embodiment.
[Fig. 12] Fig. 12 is a diagram illustrating an example of a position search range of the position P4 in a time search range and existing report information near the position P4 in the first example embodiment.
[Fig. 13] Fig. 13 is a diagram illustrating an example of report information in which a report of the position P4 is registered in the first example embodiment.
[Fig. 14] Fig. 14 is a flowchart illustrating an example of an operation for an update process in the first example embodiment.
[Fig. 15] Fig. 15 is a diagram illustrating position information and time information of report information of a position P1 before and after an update in the first example embodiment.
[Fig. 16] Fig. 16 is a flowchart illustrating another example of the operation for the registration process in the first example embodiment.
[Fig. 17] Fig. 17 is a diagram illustrating an example of a search range of a position P5 and report information in the first example embodiment.
[Fig. 18] Fig. 18 is a diagram illustrating an example of report information in which a report of the position P5 is registered in the first example embodiment.
[Fig. 19] Fig. 19 is a flowchart illustrating another example of the operation for the search process in the first example embodiment.
[Fig. 20] Fig. 20 is a diagram illustrating an example of setting the search range of the position Px in the first example embodiment.
[Fig. 21] Fig. 21 is a diagram illustrating an example of the search range of the position Px and positions indicated by existing report information and dangerous driving information in the first example embodiment.
[Fig. 22] Fig. 22 is a diagram illustrating an example of a search result obtained by searching the existing report information and the dangerous driving information in the first example embodiment.
[Fig. 23] Fig. 23 is a block diagram illustrating an example of a configuration of an information management device 11 according to a second example embodiment.
[Fig. 24] Fig. 24 is a block diagram illustrating an example of a hardware configuration of a computer.

### Example Embodiments

An example in which an information management device according to an example embodiment of the present disclosure is applied to dangerous driving management will be described. The information management device described below manages a complaint from a resident or the like for dangerous driving as report information including items of details of a report, position information, and time information. In this case, a part of the reported position information of the dangerous driving is registered using a dangerous driving occurrence range candidate indicating an approximate position where the dangerous driving has been seen or the dangerous driving has been encountered. A part of the time information of the reported dangerous driving is registered using a dangerous driving occurrence time zone candidate indicating an approximate time when the dangerous driving has been seen or the dangerous driving has been encountered.

The information management device enables a search for position information including a dangerous driving occurrence range candidate and time information including a dangerous driving occurrence time zone candidate, and further enables a search for report information by specifying the dangerous driving occurrence range candidate and the dangerous driving occurrence time zone candidate. In a case where a position or a range and a time or a time zone of dangerous driving are identified by a person in charge or the like by checking an image or acceleration during vehicle driving, the information management device can update the position information and the time information of the report information. For example, the information management device updates the dangerous driving occurrence range candidate indicating an approximate range in which the dangerous driving occurred and the dangerous driving occurrence time zone candidate to a dangerous driving occurrence range indicating a range in which the occurrence of the dangerous driving is identified and a dangerous driving occurrence time zone indicating a time zone in which the occurrence of the dangerous driving is identified.

In the present example embodiment, the information management device will be described using both position information and time information, but the present invention is not limited thereto, and the information management device may use only position information.

### [First Example Embodiment]

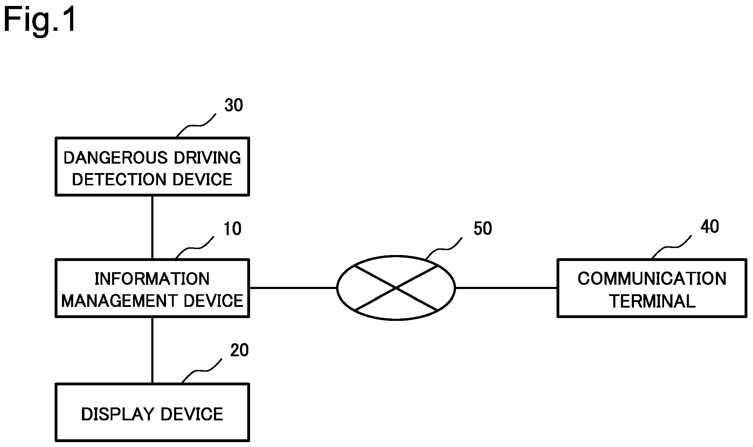

An information management system according to a first example embodiment will be described with reference to the drawings. Fig. 1 is a diagram illustrating an outline of the information management system according to the first example embodiment. In the information management system, an information management device 10 is connected to a display device 20 and a dangerous driving detection device 30. The display device 20 displays information output from the information management device 10. The display device 20 is, for example, a liquid crystal monitor.

The dangerous driving detection device 30 is a device that determines a driving situation of a vehicle and detects dangerous driving based on sensor information. Examples of the sensor information include vehicle information indicating a type, a number, a driver, and the like of the vehicle, image information captured by a drive recorder mounted on the vehicle, acceleration information acquired by an acceleration sensor, velocity information acquired by a velocity sensor, and position information acquired by a position sensor such as a global positioning system (GPS). The sensor information further includes time information when the image information, the acceleration information, the velocity information, and the position information have been acquired. The dangerous driving detection device 30 detects the dangerous driving by analyzing the image information using a known image analysis technique or analyzing the velocity information and the acceleration information.

For example, the dangerous driving detection device 30 detects, from the image information and the acceleration information, dangerous driving such as ignorance of a traffic light, a stop sign violation, unsteady driving, tailgating, sudden braking, and driving that lacks manners, such as unreasonable interruption and ignorance of a stop at a crosswalk. In the present example embodiment, driving that lacks manners and for which complaints are likely to be received from residents and the like is included in dangerous driving.

The dangerous driving detection device 30 outputs, to the information management device 10, the detected dangerous driving in association with the vehicle information, driver information, the position information, and the time information.

The information management device 10 is communicably connected to a communication terminal 40 via a network 50. The communication terminal 40 is a communication terminal used by a resident or the like to report dangerous driving. The communication terminal 40 is, for example, a smartphone. In the present example embodiment, one communication terminal is used for trial by a resident or the like, but the present invention is not limited thereto, and two or more communication terminals may be used.

The information management device 10 may be a client server type system. In that case, a server may be a cloud. The display device 20 is connected to a client terminal (not illustrated). The client terminal accesses the information management device 10 via the network 50.

### (Information Management Device 10)

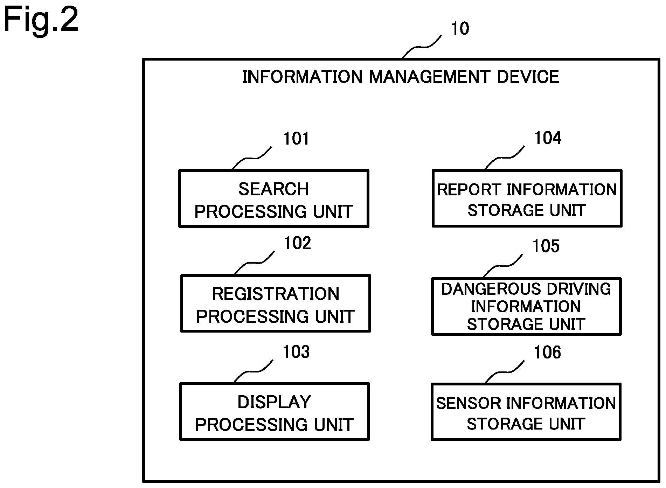

Hereinafter, the information management device 10 will be described with reference to the drawings. Fig. 2 is a block diagram illustrating a configuration example of the information management device 10 according to the first example embodiment. The information management device 10 illustrated in Fig. 2 includes a search processing unit 101, a registration processing unit 102, a display processing unit 103, a report information storage unit 104, a dangerous driving information storage unit 105, and a sensor information storage unit 106. The information management device 10 includes a communication unit (not illustrated) connected to the network 50.

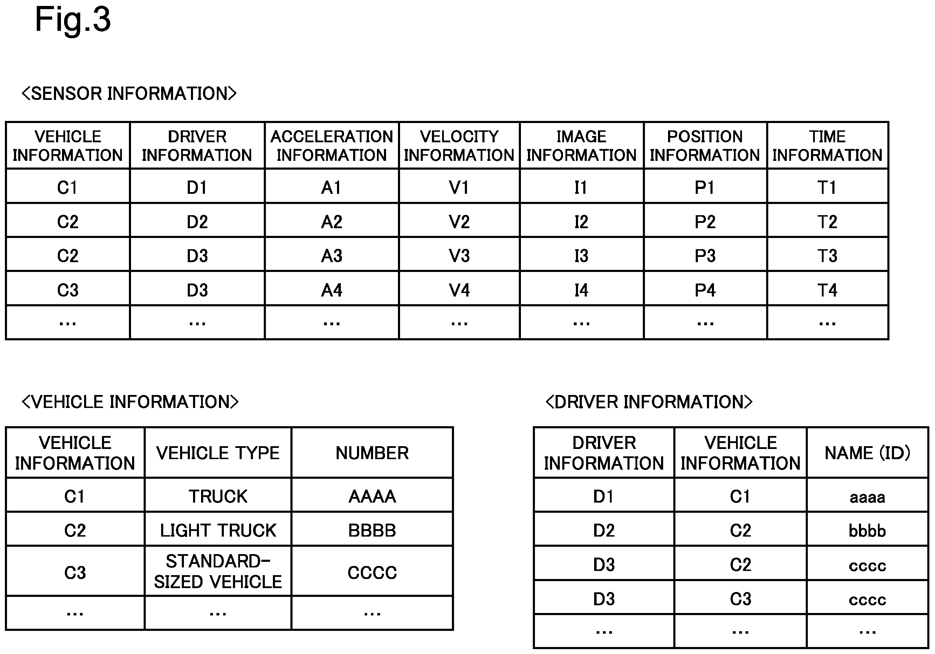

Here, the sensor information will be described with reference to the drawings. Fig. 3 is a diagram illustrating an example of the sensor information in the first example embodiment. The example of the sensor information indicates sensor information of a certain day. In the sensor information indicating a vehicle state, vehicle information, driver information, acceleration information, velocity information, image information, and time information are stored in association with each other. The sensor information is not limited to items illustrated in Fig. 3, and may include other items. The vehicle information is, for example, a vehicle type indicating a standard-sized vehicle, a truck, or the like, and a number of the vehicle. The driver information is associated with the vehicle information indicating the vehicle that a driver drove on this day, a name of the driver, or an identification (ID) of a business entity to which the driver belongs. The name and the ID may be associated with detailed information such as a past travel history (for example, whether the vehicle is traveling safely or whether there is no accident or dangerous driving history), an age, a gender, a history, and a face photograph.

### (Search Processing Unit 101)

The search processing unit 101 receives information indicating a search range, and search for report information related to position information and time information in the received search range from report information stored in the report information storage unit 104. The report information stores report information in which details of a report, the position information, and the time information are associated. The search processing unit 101 may search for report information in which the position information is included in a search position in a time zone indicated by the time information from the report information storage unit 104. The search position is an approximate position indicated by a resident or the like when the report is received.

The search range is a range to be searched by the search processing unit 101. The search range includes a position search range and a time search range. The position search range is position information of an approximate range (region). As the position information in the search range, for example, a region is designated by a circle or a rectangle, and the size of the circle or the rectangle can be arbitrarily set. The time search range is time information in an approximate range (time zone). In the time information in the search range, a time zone is designated by a start time and an end time, and a length of the time zone can be arbitrarily set.

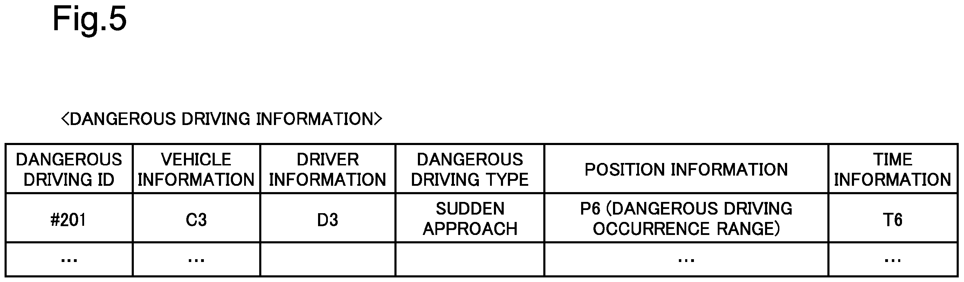

The search processing unit 101 may search for dangerous driving information related to the position information and the time information in the received search range using dangerous driving information stored in the dangerous driving information storage unit 105 as a search target. The dangerous driving information will be described later with reference to Fig. 5.

### (Registration Processing Unit 102)

The registration processing unit 102 registers the report information in the report information storage unit 104 based on an input from a user. Specifically, the registration processing unit 102 generates user report information in which details of a report indicating a report of dangerous driving from a resident or the like who is the user are associated with the position information and the time information, and registers the user report information in the report information storage unit 104 as the report information.

The position information and the time information associated with the details of the report indicate an approximate range of a position (hereinafter, also referred to as a dangerous driving position) where the resident or the like saw or encountered the dangerous driving based on the report from the resident or the like and an approximate range of a time (hereinafter, also described as a dangerous driving time) when the resident or the like saw or encountered the dangerous driving based on the report from the resident or the like. The ranges are referred to as a dangerous driving occurrence range candidate and a dangerous driving occurrence time zone candidate.

The dangerous driving occurrence range candidate is indicated, for example, by a range from an approximate position corresponding to the dangerous driving position reported from the resident or the like to a position away from the approximate position by a predetermined distance. The dangerous driving occurrence range candidate indicates, for example, a range with a radius of 100 m from the approximate position P0. The predetermined distance is not limited to 100 m. For example, it is assumed that the predetermined distance can be arbitrarily set according to the details of the dangerous driving position reported from the resident or the like.

The registration processing unit 102 may perform the registration after searching that the report information (user report information) before the registration does not overlap existing report information. That is, when the user report information is different from the existing report information, the registration processing unit 102 may register the user report information in the report information storage unit 104. For example, the registration processing unit 102 sends the position information and the time information included in the user report information generated for the registration to the search processing unit 101 to search as the search range. The user is, for example, an administrator, a person in charge, a resident, or the like.

The registration processing unit 102 updates the dangerous driving occurrence range candidate to a dangerous driving occurrence range further narrowed down from the dangerous driving occurrence range candidate based on the sensor information, and updates the dangerous driving occurrence time zone candidate to a dangerous driving occurrence time zone further narrowed down from the dangerous driving occurrence time zone candidate. The registration processing unit 102 may update the dangerous driving occurrence range candidate to the dangerous driving occurrence range and update the dangerous driving occurrence time zone candidate to the dangerous driving occurrence time zone according to an instruction of the person in charge who has checked the sensor information. The dangerous driving occurrence range may become a specific position as a result of narrowing down. Examples of a case where the range becomes the specific position include a case where a place (position) where dangerous driving occurred can be identified, such as a stop sign violation, sudden braking, or sudden approach due to insufficient checking. Similarly, in the case of the dangerous driving occurrence time zone, there is a case where the time at which the dangerous driving occurred can be identified.

### (Display Processing Unit 103)

The display processing unit 103 receives an instruction to output various types of information from the search processing unit 101 or the registration processing unit 102, and outputs various types of information. For example, the display processing unit 103 superimposes, on a map, the position search range in the search range on the display device 20 to display and output the map and the position search range. The display processing unit 103 also displays and outputs the time search range together with the map on the display device 20.

The size (for example, the radius) and position of the position search range may be changeable. For example, the position search range may be able to be intuitively selected by the administrator, such as the radius changing each time the position search range is clicked. Specific examples of the operation method that can intuitively change the range include, but are not limited to, a method of changing the radial range or changing the shape in dragging (mouse) or flicking (smartphone/tablet or the like). The shape of the range may be not only a circle, an ellipse, or a rectangle but also any shape.

As the time search range, a date and a time zone can be input. For example, when a date is input and a time is input, the time search range may be set to be a time zone of one hour before and after the time. The time search range can be searched by inputting only a date.

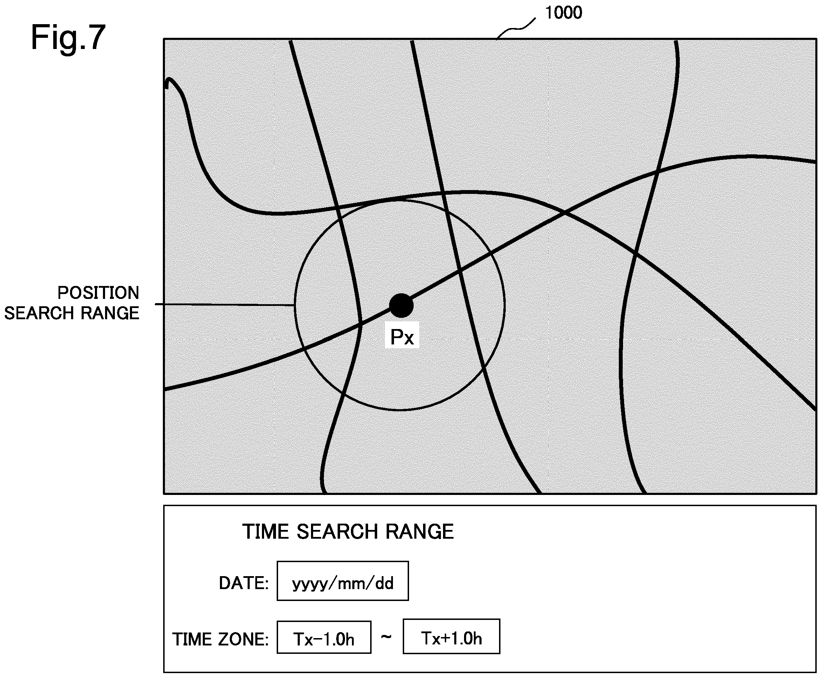

The display processing unit 103 transmits information (for example, position information and time information of a position Px set on a map illustrated in Fig. 7 to be described later) of the set position search range and time search range to the search processing unit 101.

### (Report Information Storage Unit 104)

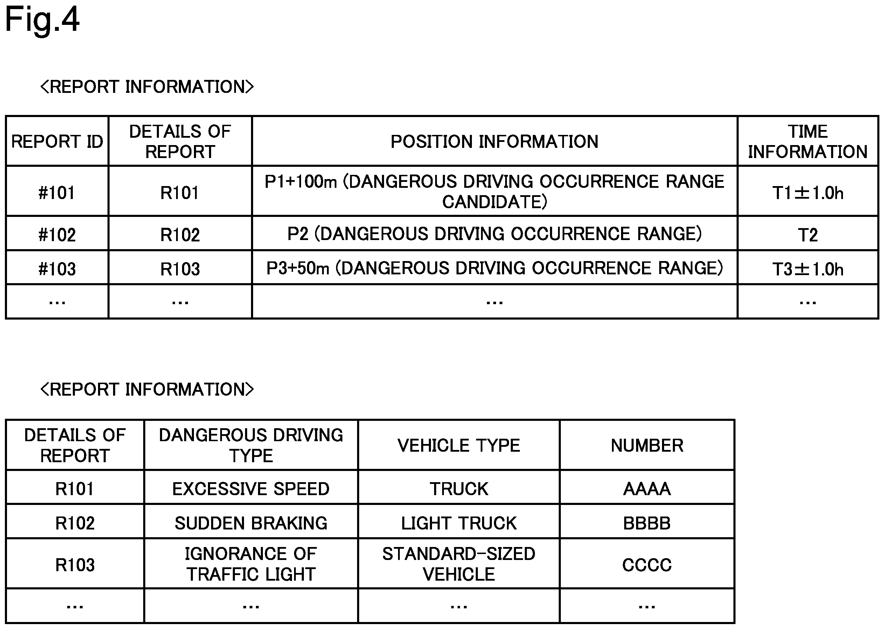

The report information storage unit 104 stores report information indicating a report of dangerous driving from a resident or the like. Fig. 4 is a diagram illustrating an example of the report information in the first example embodiment. In the example of the report information, a report ID, details of a report, position information, and time information are stored in association with each other. The report ID is an identifier of the report information. The details of the report are details regarding dangerous driving reported from a resident or the like. The details of the report include, for example, a dangerous driving type, a vehicle type, and a number. Examples of the dangerous driving type include unsteady driving (suspected of drinking, dozing, and driving while doing something), excessive speed, tailgating, a stop line violation, sudden approach (insufficient checking), sudden braking (distraction, insufficient checking), and ignoring a stop at a crosswalk. The report information is not limited to the items illustrated in Fig. 4, and may include other items. In the example of the details of the report in Fig. 4, information is described in the items of dangerous driving type, vehicle type, and number, but it is not necessary that information is described in all the items. The report information may be generated using an item of information obtained from a resident or the like among the items of details of a report.

### (Dangerous Driving Information Storage Unit 105)

The dangerous driving information storage unit 105 stores dangerous driving information regarding dangerous driving detected by the dangerous driving detection device 30 based on sensor information of each vehicle. Fig. 5 is a diagram illustrating an example of the dangerous driving information in the first example embodiment. In the example of the dangerous driving information, a dangerous driving ID, vehicle information, driver information, a dangerous driving type, position information, and time information are stored in association with each other. The dangerous driving ID is an identifier of the dangerous driving information. The dangerous driving type is a type of dangerous driving detected by the dangerous driving detection device 30 based on the sensor information.

The example of the dangerous driving information in Fig. 5 indicates that the dangerous driving type "sudden approach" has been detected at position information "P6" at time information "T6" for vehicle information "C3" and driver information "D3". In this case, since the dangerous driving type is "sudden approach", the position information "P6" is the position (dangerous driving occurrence range) where the sudden approach occurred, and the time information "T6" is the time (dangerous driving occurrence time zone) when the dangerous driving occurred.

### (Sensor Information Storage Unit 106)

The sensor information storage unit 106 stores the sensor information transmitted from each vehicle. The sensor information may be transmitted from each vehicle to the information management device 10, for example. The sensor information storage unit 106 stores, for example, the sensor information illustrated in Fig. 3 for each date. The sensor information is not limited to be stored for each date, and may be stored for each vehicle or for each driver, for example.

### (Operation)

An operation of the information management device 10 according to the first example embodiment will be described with reference to the drawings. The operation of the information management device 10 includes a search process, a registration process, and an update process.

### <Search Process>

The search process by the information management device 10 will be described. The search process is a process of searching for report information registered in the information management device 10 based on a report of a resident or the like. The following search process is, for example, an example of checking whether or not a report of dangerous driving from a resident or the like overlaps an existing report in the information management device 10.

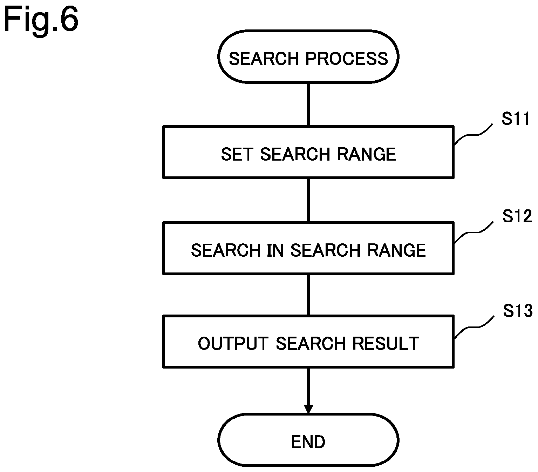

Fig. 6 is a flowchart illustrating an example of an operation for the search process in the first example embodiment. First, the person in charge (user) receives a report indicating that "I saw sudden braking (dangerous driving) by a vehicle of a business entity near a position Px at around a time T on a date D." from a resident or the like on the phone, inputs information of an approximate position Px to the information management device 10, and causes the display device 20 to display and output a map including the approximate position Px.

The display processing unit 103 sets a time search range in a time zone including the time T on the date D and a position search range of the position Px on the map based on the input from the person in charge (step S11). Fig. 7 is a diagram illustrating an example of setting the position search range near the position Px in the first example embodiment. As illustrated in a map display 1000 in Fig. 7, the position search range is set, for example, by adjusting a range centered on the position Px superimposed and displayed on the map with a mouse or the like. The time search range is set, for example, by inputting the date and the time zone in a text box for a date and a time zone displayed below the map. In this case, the date is "yyyy/mm/dd", and the time zone is "Tx ± 1.0 h".

The display processing unit 103 extracts information of the search range based on a range (position search range) of a circle centered on the position Px in consideration of the scale of the map displayed and a range (time search range) of the date and the time zone. The setting of the search range is an example and is not limited thereto. For example, only the date may be input as the time search range. Then, in this case, if the number of search results is large, a time zone may be further input to limit the search results.

In the setting of the search range, the person in charge appropriately adjusts the radius of the position search range centered on the position Px on the map according to the detail of the report from the resident or the like. For example, the radius is set to 50 m in a case where the report from the resident or the like includes a detailed position, and the radius is set to 100 m in a case where the report is not detailed. The reference of the radius is an example, and the present invention is not limited thereto. The shape of the position search range is not particularly limited.

Returning to Fig. 6, the display processing unit 103 transmits information of the set search range to the search processing unit 101. The search processing unit 101 receives the search range from the display processing unit 103. The search processing unit 101 refers to the report information stored in the report information storage unit 104, and searches for report information including the position information and the time information that match the received search range (step S12). In this case, the matching includes a case where the search range matches the position information and the time information, and a case where the search range partially overlaps the position information and the time information.

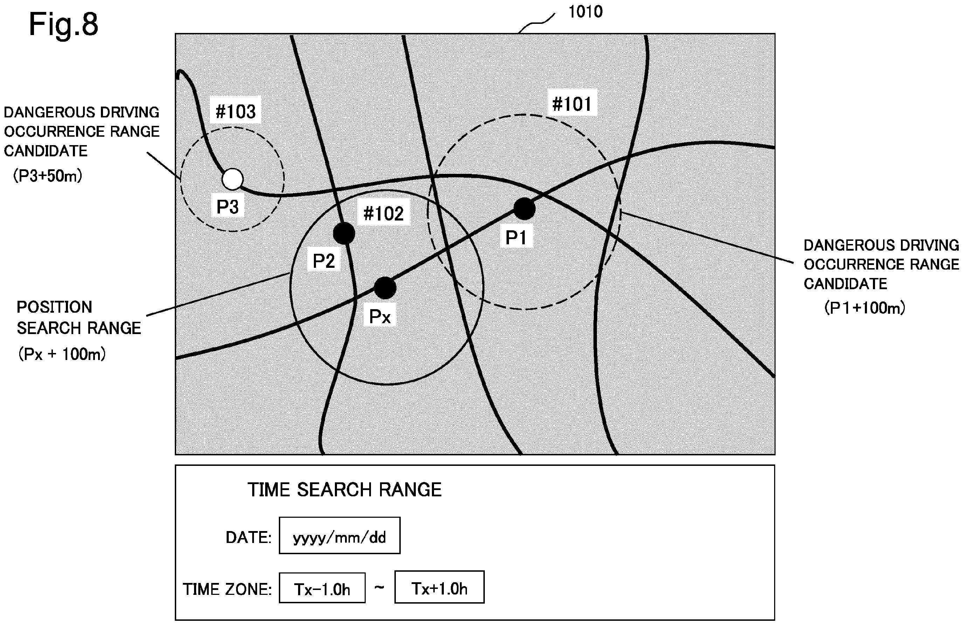

Fig. 8 is a diagram illustrating an example of a position search range of the position Px in a certain time search range and report information near the position Px in the first example embodiment. A map display 1010 illustrated in Fig. 8 indicates a position search range and a time search range of the position Px, dangerous driving occurrence range candidates of positions P1 with report ID of "#101" and P3 with "#103" near the position Px, and a dangerous driving occurrence range of a position P2 with "#102" in a time zone "Tx ± 1.0 h" in a time search range of the date "yyyy/mm/dd". In the present example embodiment, the report information is indicated by a black circle (•) when the report information is within the search range, and is indicated by a white circle (∘) when the report information is out of the search range. In this case, "within the search range" means that the report information overlaps the search range. "Out of the search range" means that the report information does not overlap the search range.

In the map display 1010 in Fig. 8, what is included in the position search range of the position Px in the time zone "Tx ± 1.0 h" on the date "yyyy/mm/dd" that is the time search range is the dangerous driving occurrence range candidate of the position P1 with the report ID "#101" and the dangerous driving occurrence range of the position P2 with the report ID "#102". For the existing reports illustrated in Fig. 8, the example of the report information illustrated in Fig. 4 is used.

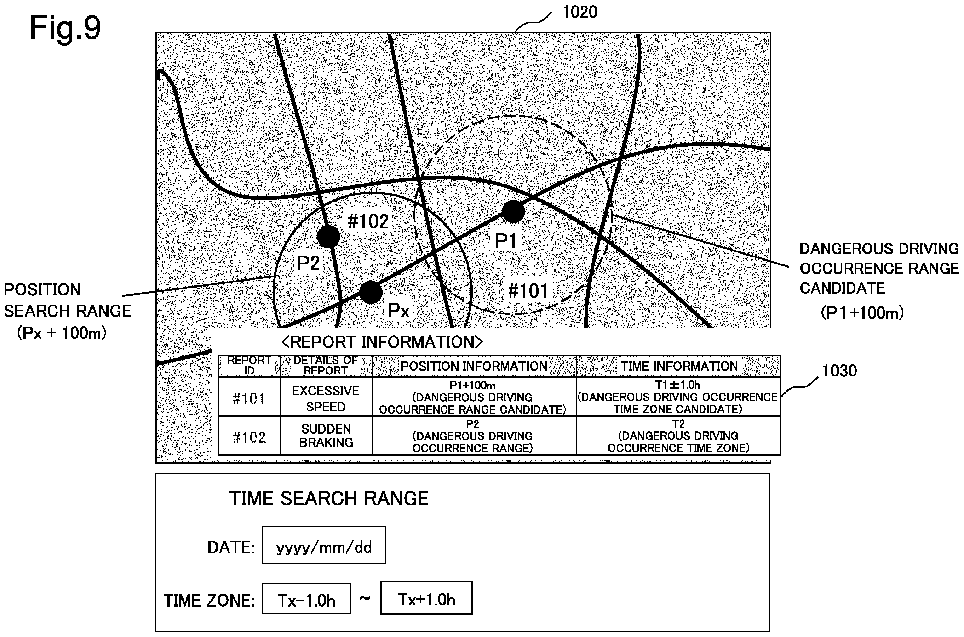

The search processing unit 101 transmits the search result to the display processing unit 103. The display processing unit 103 outputs the search result (step S13). Fig. 9 is a diagram illustrating an example of the search result searched in the search range of the position Px in the first example embodiment. The example of the search result illustrated in Fig. 9 is a map display 1020 and data 1030 of the search result. In the display of such search results as illustrated in Fig. 9, the search results may be ranked or filtered under a predetermined condition. The predetermined condition is, for example, details of a report, a distance from a search position (the position of the center of the search range), or the like.

In the search process described above, the report ID "#101" and the report ID "#102" of the existing report information are output as the search result for the search range (position Px + 100 m) set by the person in charge based on the report of dangerous driving (near the position Px) from the resident or the like.

### <Registration Process>

The registration process by the information management device 10 will be described. In the registration process, the user report information is registered in the report information storage unit 104 based on the received report. The following registration process is an example in which registration is performed after it is checked that a report of dangerous driving from a resident or the like overlaps an existing report.

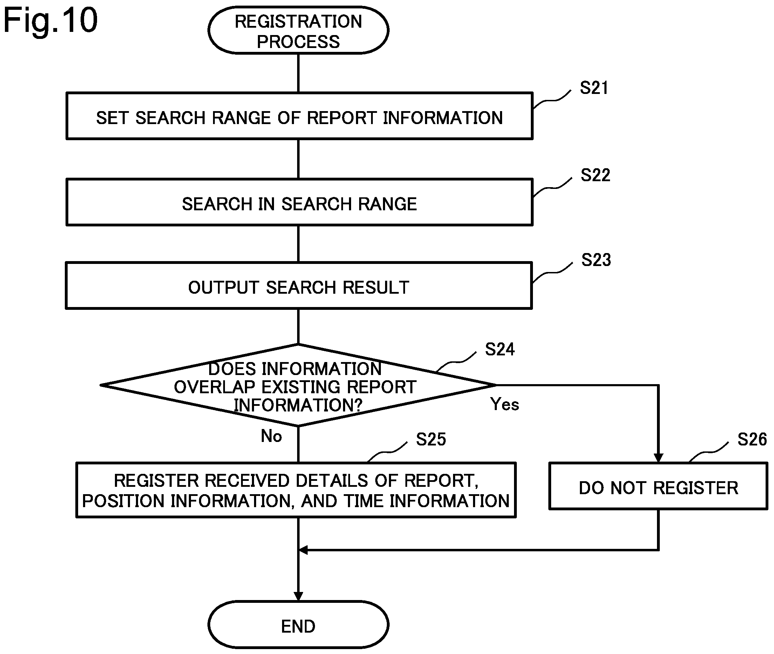

Fig. 10 is a flowchart illustrating an example of an operation for the registration process in the first example embodiment. The person in charge receives, from a resident or the like on the phone, a report indicating that "I saw an unsteadily driven vehicle near the position P4 at around a time T4.", inputs information of the position P4 and the time T4 to the information management device 10, and causes the display device 20 to display a map including the position P4 and a time zone including the time T4.

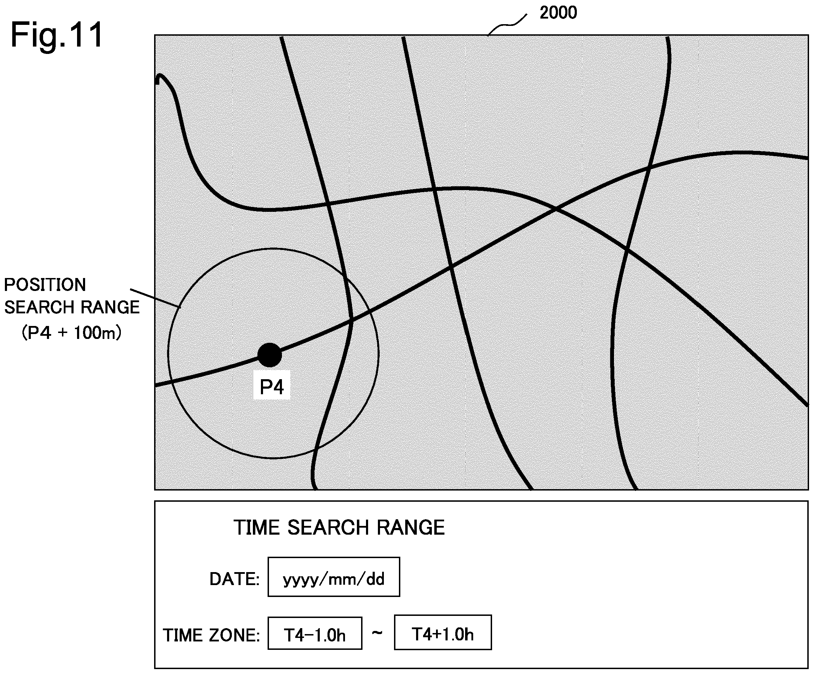

The display processing unit 103 sets a search range of the position P4 on the map based on the input from the person in charge (step S21). Fig. 11 is a diagram illustrating an example of setting the search range of the reported position P4 in the first example embodiment. A position search range in the search range is set, for example, by adjusting the position search range of the position P4 superimposed and displayed on the map with a mouse or the like. A time search range is set, for example, by inputting a date and a time zone. The time search range may be set only by the date. In this case, as illustrated in Fig. 11, the position search range is a radius of 100 m centered on the position P4, and the time search range is one hour before and after (± 1.0 h) the time T4.

Returning to Fig. 10, the display processing unit 103 sends information of the set search range to the search processing unit 101, and the search processing unit 101 receives the search range from the display processing unit 103. The search processing unit 101 refers to the report information in the report information storage unit 104, and searches for report information in which position information and time information are included in the received search range (step S22).

The search processing unit 101 passes the search result to the registration processing unit 102 and the display processing unit 103. The display processing unit 103 displays and outputs the search result in order to check overlap with the existing report information (step S23).

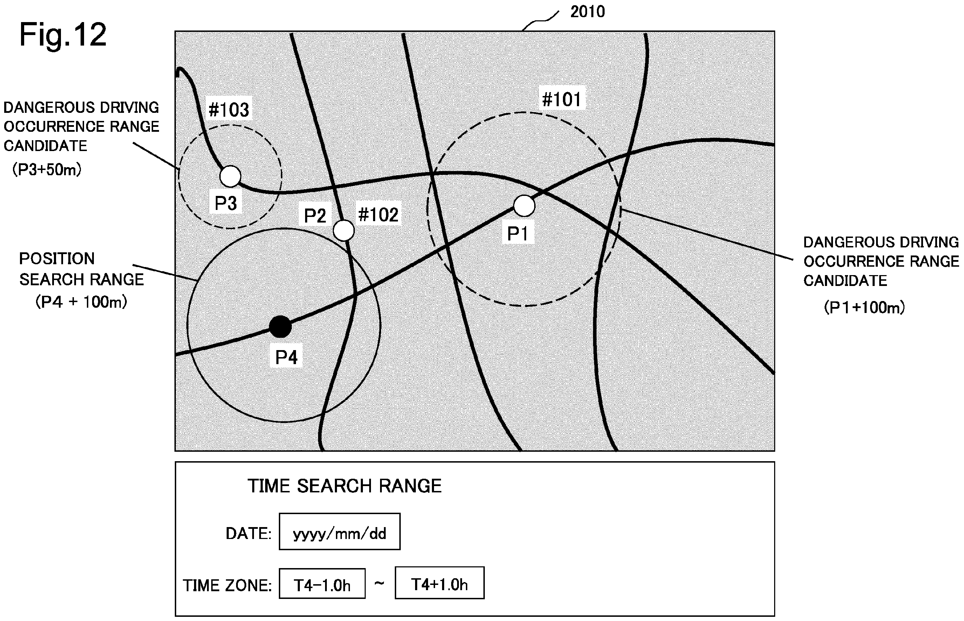

Fig. 12 is a diagram illustrating an example of the position search range of the position P4 in the time search range and existing report information near the position P4 in the first example embodiment. A map display 2010 illustrated in Fig. 12 indicates the position search range of the position P4 in a time zone T4 ± 1.0 h on a date "yyyy/mm/dd" that is the time search range of the position P4, dangerous driving occurrence range candidates of the position P1 with the report ID "#101" and the position P3 with the report ID "#103" reported near the position P4, and the dangerous driving occurrence range of the position P2 with the report ID "#102". In Fig. 12, since the report IDs "#101", "#102", and "#103" are included in the time search range T4 ± 1.0 h but are not included in the position search range of the position P4, the position P1, the position P2, and the position P3 are displayed with white circles indicating that the positions P1, P2, and P3 are outside the search range. Therefore, in the map display 2010, position information and time information of existing report information included in the search range of the position P4 are not present.

In a case where the position information and the time information of the existing report do not overlap the search range (No in step S24), the registration processing unit 102 generates a report ID, sets the position search range as a dangerous driving occurrence range candidate, sets the time search range as a dangerous driving occurrence time zone candidate, and registers the generated report ID, the received details of the report, the position information (dangerous driving occurrence range candidate), and the time information (dangerous driving occurrence time zone candidate) in the report information storage unit 104 in association with each other (step S25).

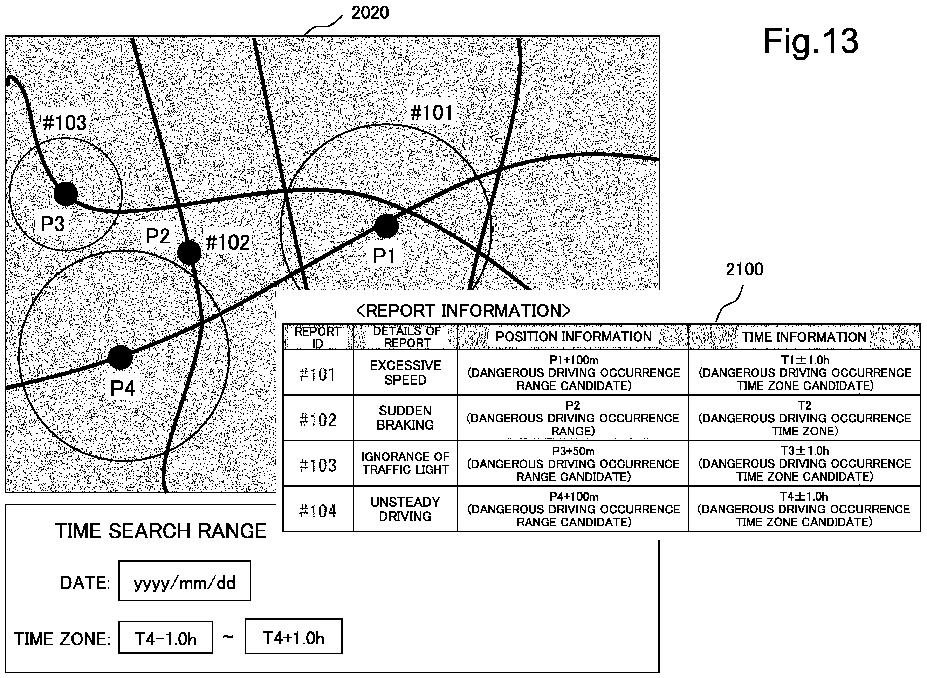

Fig. 13 is a diagram illustrating an example of report information in which the report of the position P4 is registered in the first example embodiment. As indicated by data 2100 of the report information in Fig. 13, a report ID "#104", details of a report indicating "unsteady driving", position information "P4 + 100 m (dangerous driving occurrence range candidate)", and time information "T4 ± 1.0 h (dangerous driving occurrence time zone candidate)" are newly registered in the report information storage unit 104.

In a map display 2020 illustrated in Fig. 13, in addition to the position P1 with the existing report ID "#101", the position P2 with the report ID "#102", and the position P3 with the report ID "#103", the dangerous driving occurrence range candidate and the dangerous driving occurrence time zone candidate of the position P4 with the report ID "#104" are added to report information displayed in a superimposed manner.

On the other hand, when the position information and the time information of the existing report overlap the search range (Yes in step S24), the registration processing unit 102 does not register the received report (step S26). In this case, the registration processing unit 102 may transmit overlapping report information to the display processing unit 103, and the display processing unit 103 may superimpose and display the report information on the map. As a result, the person in charge does not need to manage a large amount of report information for dangerous driving reported near a certain place by checking overlapping reports in a search, and a burden on management is reduced.

In a case where the search range overlaps even slightly with the position information and the time information of the report information, the search processing unit 101 may determine that the search range overlaps the position information and the time information. However, the determination performed by the search processing unit 101 is not limited thereto. The search processing unit 101 may determine that the search range overlaps the position information and the time information of the report information when the overlapping range exceeds a predetermined threshold. For example, when the threshold is set to 80%, the search processing unit 101 determines that the report information in which the overlap between the position search range and the position information of the report information exceeds 80% and the overlap between the time search range and the time information of the report information exceeds 80% overlaps. Different thresholds may be set for the position search range and the time search range. For example, the threshold for the position search range may be set to 80%, and the threshold for the time search range may be set to 50%.

In the above-described registration process, an example has been described in which registration is performed after checking of overlap between a report of dangerous driving from a resident or the like and an existing report. The registration processing unit 102 may generate and register report information of dangerous driving reported from a resident or the like without checking overlap with an existing report. For example, the registration processing unit 102 may check overlap, then present the checking result to the person in charge, and receive a final determination as to whether or not to register from the person in charge.

The dangerous driving occurrence range candidate and the dangerous driving occurrence time zone candidate of the report information are updated to the dangerous driving occurrence range and the dangerous driving occurrence time zone by the update process to be described later when the occurrence range and the time zone of the dangerous driving are identified by analysis of the sensor information, checking work, or the like.

### <Update Process>

The update process by the information management device 10 will be described. The update process is a process of updating position information (dangerous driving occurrence range candidate) and time information (dangerous driving occurrence time zone candidate) of report information based on sensor information (image information and acceleration information).

When the report information is registered based on a report from a resident or the like, various types of information (image and acceleration) at the time of dangerous driving are analyzed from the sensor information based on details of a report, the position information, and the time information included in the report information at an arbitrary timing. Then, the position information (dangerous driving occurrence range candidate) and the time information (dangerous driving occurrence time zone candidate) of the report information are updated based on the position information and the time information in which the dangerous driving occurred. Instead of analyzing the various types of information, the person in charge may check an image of the sensor information to detect the dangerous driving.

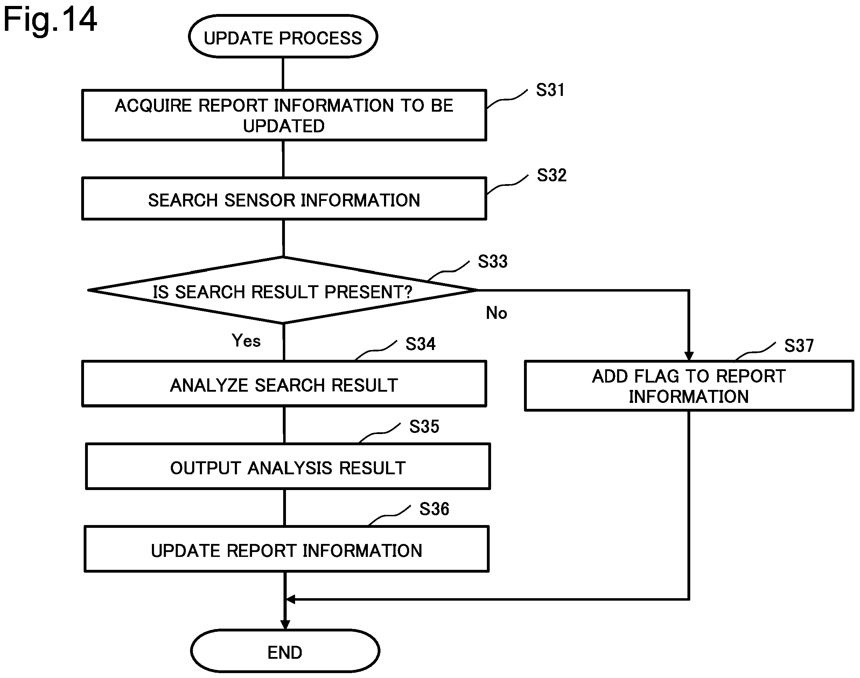

Fig. 14 is a flowchart illustrating an example of an operation for the update process in the first example embodiment. The registration processing unit 102 acquires report information (details of a report, position information, and time information) to be updated (step S31). The registration processing unit 102 sends the acquired report information to the search processing unit 101, and the search processing unit 101 receives the report information from the registration processing unit 102. The search processing unit 101 searches the sensor information (image information, acceleration information, and velocity information) based on the position information and the time information included in the report information (step S32). In the processing in step S32, dangerous driving information that is a result of analyzing dangerous driving in advance may be searched instead of the sensor information, or both the sensor information and the dangerous driving information may be searched. In a case where a search result matching a sensor information condition is obtained (Yes in step S33), the search processing unit 101 sends the search result to the dangerous driving detection device 30, and the dangerous driving detection device 30 receives the search result from the search processing unit 101.

The dangerous driving detection device 30 analyzes the sensor information of the search result (step S34). The dangerous driving detection device 30 detects a dangerous driving type and identifies position information and time information when the detected dangerous driving has been performed, based on the image information, the acceleration information, and the velocity information. The dangerous driving detection device 30 transmits a result of detecting the dangerous driving type, and the identified position information, and the identified time information to the display processing unit 103 as an analysis result, and the display processing unit 103 outputs the search result (step S35).

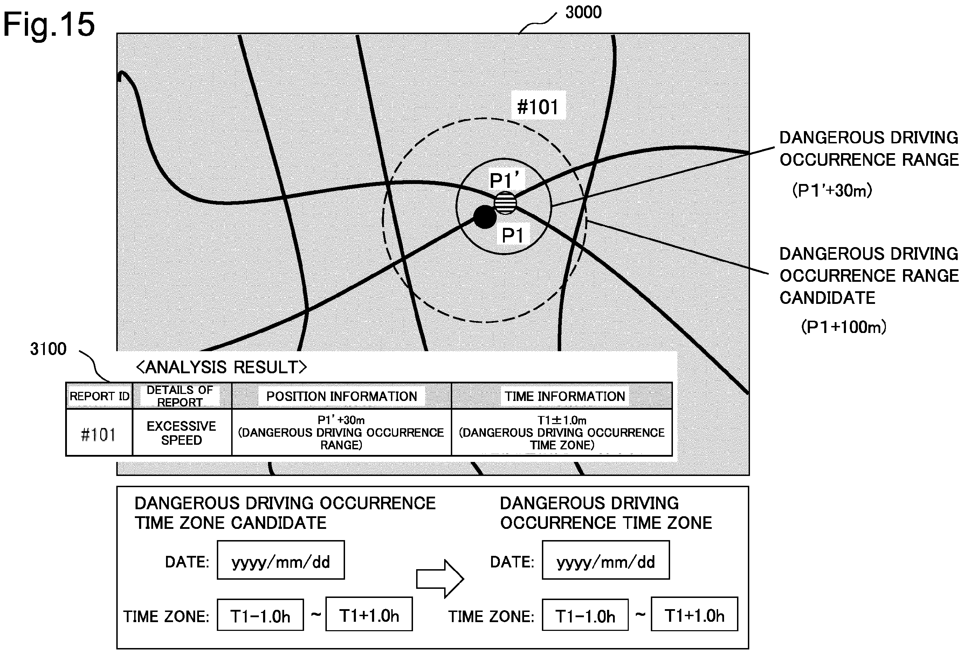

Fig. 15 is a diagram illustrating position information and time information of report information of the position P1 before and after an update in the first example embodiment. On a map display 3000, a dangerous driving occurrence range candidate which is position information of the position P1 with the report ID "#101" before the update, a dangerous driving occurrence time zone candidate which is time information, a dangerous driving occurrence range which is the position information after the update, and a dangerous driving occurrence time zone which is the time information are displayed.

A display 3100 is data of an analysis result by the dangerous driving detection device 30. As the analysis result, for the report ID "#101", a dangerous driving type is "excessive speed", a dangerous driving occurrence range in which the speed has been excessive is a "radius 30 m (P1' + 30 m) centered on P1'", and a dangerous driving occurrence time zone in which the speed has been excessive is "T1 ± 1.0 m" .

The registration processing unit 102 updates the dangerous driving occurrence range candidate and the dangerous driving occurrence time zone candidate of the position P1 with the report ID "#101", which are the report information, to the dangerous driving occurrence range centered on the position P1', which is the position information of the analysis result, and the dangerous driving occurrence time zone, which is the position information of the analysis result (step S36). Although the registration processing unit 102 updates the report information in the present example embodiment, the present invention is not limited thereto. For example, the person in charge may check the displayed analysis result and select whether to update the report information with the analysis result. In this case, when the selection of the update is input by the person in charge and the registration processing unit 102 receives the selection input, the registration processing unit 102 updates the report information.

In a case where the search result matching the condition is not obtained (No in step S33), the search processing unit 101, the registration processing unit 102 adds a flag of "no applicable driving" to the report information to be updated (step S36). This is because it is considered that there is a possibility of an error in the report regarding the dangerous driving from the resident or the like, for example, in a case of dangerous driving of a vehicle of a different business entity, or there is a misunderstanding of a reported position or time. As described above, by adding a flag to a report information having a possibility of an error in a report concerning dangerous driving from a resident or the like, the person in charge can manage the report without ignoring the report from the resident or the like. As the addition of the flag, for example, a flag item may be provided in the report information, the flag item may be checked, or the report ID may be changed to a specific number indicating that there is no search result.

In the update process according to the present example embodiment, the dangerous driving occurrence range candidate and the dangerous driving occurrence time zone candidate are overwritten and updated with the dangerous driving occurrence range and the dangerous driving occurrence time zone, but the present invention is not limited thereto. The registration processing unit 102 may perform the update process by storing the dangerous driving occurrence range and the dangerous driving occurrence time zone in addition to the dangerous driving occurrence range candidate and the dangerous driving occurrence time zone candidate to the report information, that is, the report information storage unit 104. For example, in the example of Fig. 4, as the position information associated with the report ID, the details of the report, and the like, the dangerous driving occurrence range may be set as the time information in addition to the dangerous driving occurrence range candidate, and the dangerous driving occurrence time zone may be stored in the report information storage unit 104 in addition to the dangerous driving occurrence time zone candidate.

### <Another Registration Process>

Another registration process by the information management device 10 will be described. The following registration process is a process in which a resident or the like (user) registers report information of dangerous driving in the report information storage unit 104 using the communication terminal 40.

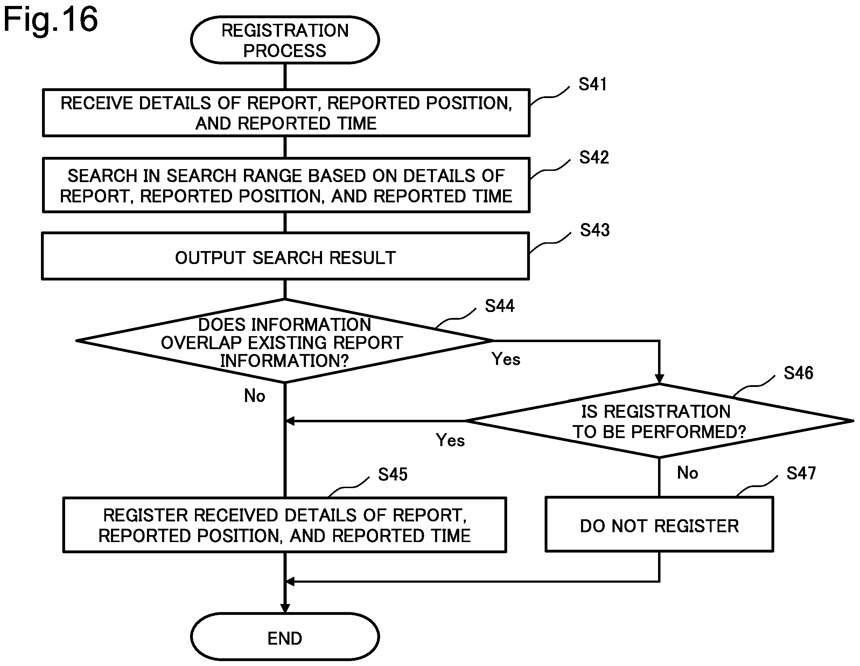

Fig. 16 is a flowchart illustrating another example of the operation for the registration process in the first example embodiment. When a resident or the like sees dangerous driving or encounters dangerous driving, the resident or the like executes an application of the communication terminal 40 and communicably connects to the information management device 10. The application may be, for example, a browser application. The dangerous driving reported from the resident or the like will be described below as "exceeding a speed limit near a position P5 around a time T5".

The information management device 10 receives details of the report, the reported position, and the reported time from the communication terminal 40 operated by the resident or the like (step S41). The display processing unit 103 of the information management device 10 transmits map information including the reported position P5 to the communication terminal, and displays the map information and a search range of the position P5. The resident or the like adjusts the search range of the position P5 on a screen of the communication terminal 40, and transmits the search range of the position P5 based on the reported position and the reported time from the communication terminal 40 to the information management device 10.

The display processing unit 103 of the information management device 10 sends information of the search range based on the reported position and the reported time to the search processing unit 101, and the search processing unit 101 receives the search range from the display processing unit 103. The search processing unit 101 refers to the report information in the report information storage unit 104, and searches for report information in which position information and time information are included in the received search range (step S42).

The search processing unit 101 passes the search result to the registration processing unit 102 and the display processing unit 103. The display processing unit 103 outputs the search result to the resident or the like in order to check whether the search result overlaps the report information (step S43).

In a case where the search result does not overlap the report information (No in step 44), the registration processing unit 102 stores, to the report information storage unit 104, report information in which the details of the report of the received position P5, the position information of the reported position, and the time information of the reported time are associated with each other (step S45). Here, for example, the registration processing unit 102 sets, as the position information, a radius of 100 m centered on the position P5 as a dangerous driving range candidate, and sets, as the time information, a dangerous driving time zone candidate for 30 minutes before and after the time T5.

In a case where the report information received from the resident or the like and the report information in the report information storage unit 104 overlap with each other (Yes in step 44), the registration processing unit 102 instructs the display processing unit 103 to output the report information received from the resident or the like and the search result of the report information, and cause the communication terminal 40 of the resident or the like to display the report information and the search result.

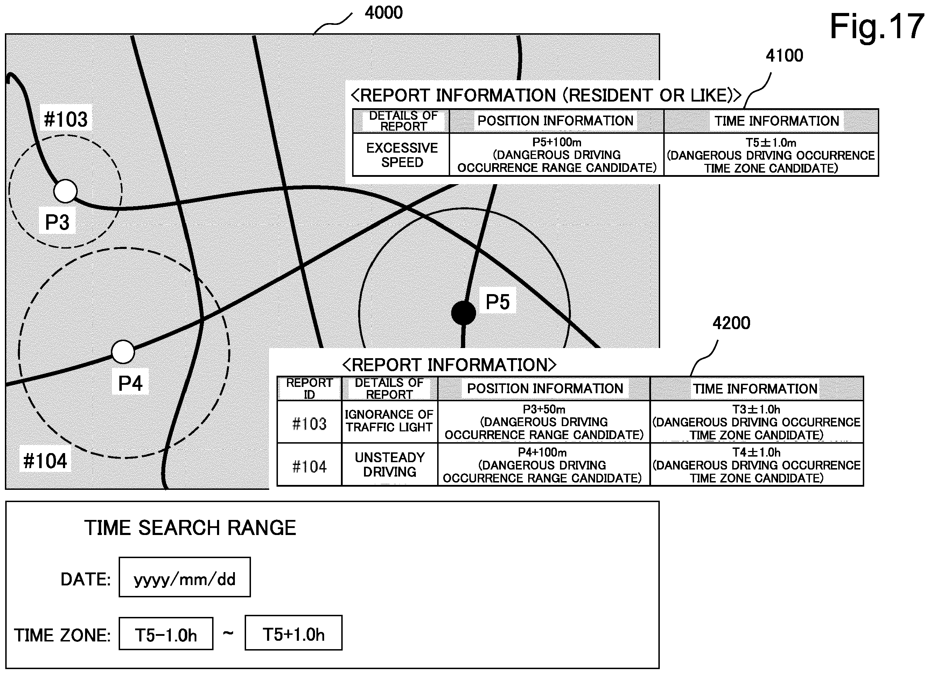

Fig. 17 is a diagram illustrating an example of the search range of the position P5 and the report information in the first example embodiment. A map display 4000 illustrated in Fig. 17 indicates the position P3 with the report ID "#103" and the position P4 with the report ID "#104", which are the report information near the position P5 matching the time search range of the search range of the position P5. The registration processing unit 102 instructs the display processing unit 103 to output data 4100 of the report information received from the resident or the like and data 4200 which is the search result of the report information, and cause the communication terminal 40 of the resident or the like to display the data 4100 and the data 4200.

The registration processing unit 102 instructs the display processing unit 103 to cause the communication terminal 40 of the resident or the like to display registration checking of selecting "register" or "registration not required" for the reported position P5. As a result, the resident or the like who has reported the dangerous driving can compare the reported information of the dangerous driving and the report information of the search result displayed on the communication terminal 40, and select "registration not required" in a case where it is determined that the information overlaps the report information, and select "register" in a case where it is determined that the information does not overlap the report information.

When the selected input from the communication terminal 40 is "registration not required" (No in step S46), the registration processing unit 102 ends the registration process without registering the report from the resident or the like (step S47).

When the selected input is "register" (Yes in step S46), the registration processing unit 102 generates a report ID and stores, to the report information storage unit 104, the report information in which the details of the report of the received position P5, the position information of the reported position, and the time information of the reported time are associated with each other (step S45). In the case illustrated in Fig. 17, the resident or the like determines that the report regarding the dangerous driving at the position P5 has not been registered yet, and selects "register" displayed on the communication terminal 40.

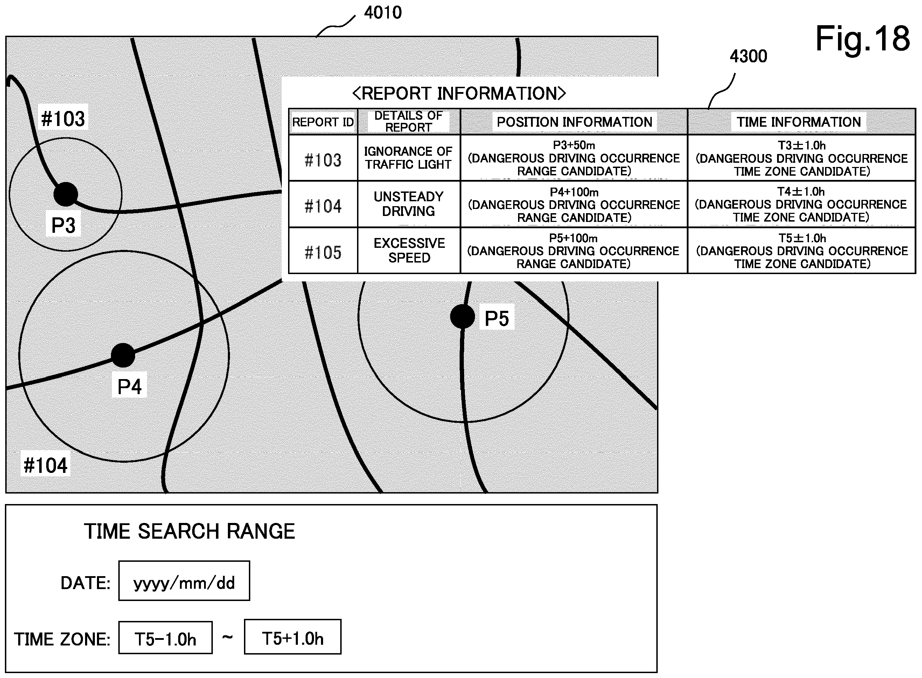

Fig. 18 is a diagram illustrating an example of report information in which the report of the position P5 is registered in the first example embodiment. As indicated by data 4300 of report information in Fig. 18, the report ID "#105", details of a report indicating "excessive speed", position information "P5 + 100 m (dangerous driving occurrence range candidate)", and time information "T5 ± 1.0 h" are newly registered in the report information storage unit 104.

In a map display 4010 illustrated in Fig. 18, the position P5 with the report ID "#105" is added in addition to the position P3 with the existing report ID "#103" and the position P4 with the report ID "#104".

### <Search Process with Dangerous Driving Information>

Another example of the search process by the information management device 10 will be described. The following search process is an example of searching report information and dangerous driving information registered in the information management device 10 based on a report of a resident or the like.

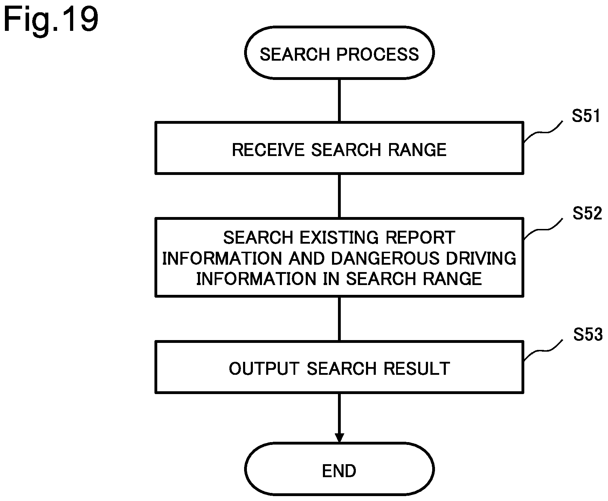

Fig. 19 is a flowchart illustrating another example of the operation for the search process in the first example embodiment. It is described that a report of dangerous driving from a resident or the like is "At a time Tx, I almost came into contact due to sudden approach near a position Px.".

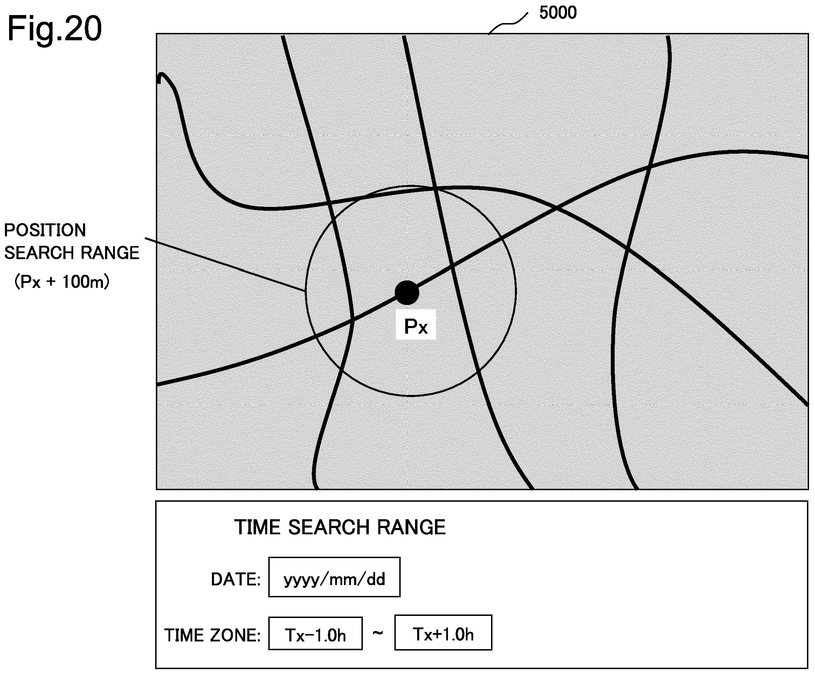

The display processing unit 103 of the information management device 10 sets a position search range and a time search range of the position Px on the map based on an input from the person in charge (user). Fig. 20 is a diagram illustrating an example of setting the search range of the position Px in the first example embodiment. As illustrated in a map display 5000 in Fig. 20, the position search range in the search range is set by adjusting the range of the position Px superimposed and displayed on the map with a mouse or the like. The time search range is set, for example, by inputting a date and a time zone.

Returning to Fig. 19, the display processing unit 103 sends information of the set search range to the search processing unit 101, and the search processing unit 101 receives the search range from the display processing unit 103 (step S51). The search processing unit 101 refers to the report information in the report information storage unit 104 and the dangerous driving information in the dangerous driving information storage unit 105, and searches for report information including the position information and the time information in the received search range (step S52).

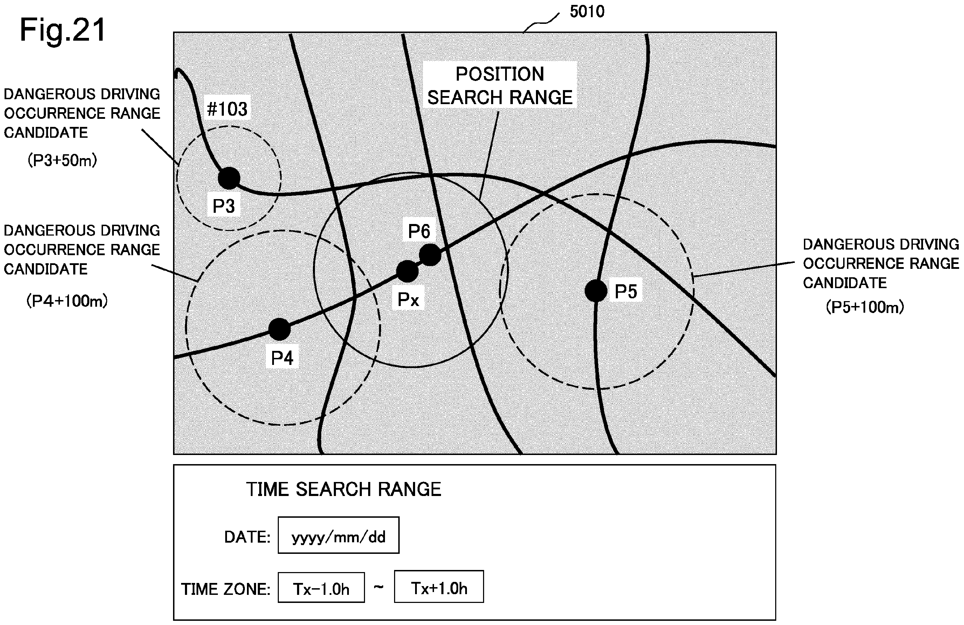

Fig. 21 is a diagram illustrating an example of the search range of the position Px and positions indicated by existing report information and dangerous driving information in the first example embodiment. A map display 5010 illustrated in Fig. 21 indicates the position search range of the position Px and the report information and the dangerous driving information near the position Px when the time search range is Tx ± 1.0 h. In this example, the report information is the position P3 with the report ID "#103", the position P4 with "#104", and the position P5 with "#105", and the dangerous driving information is the position P6 with the dangerous driving ID "#201". In this case, an example of the dangerous driving information illustrated in Fig. 5 is used.

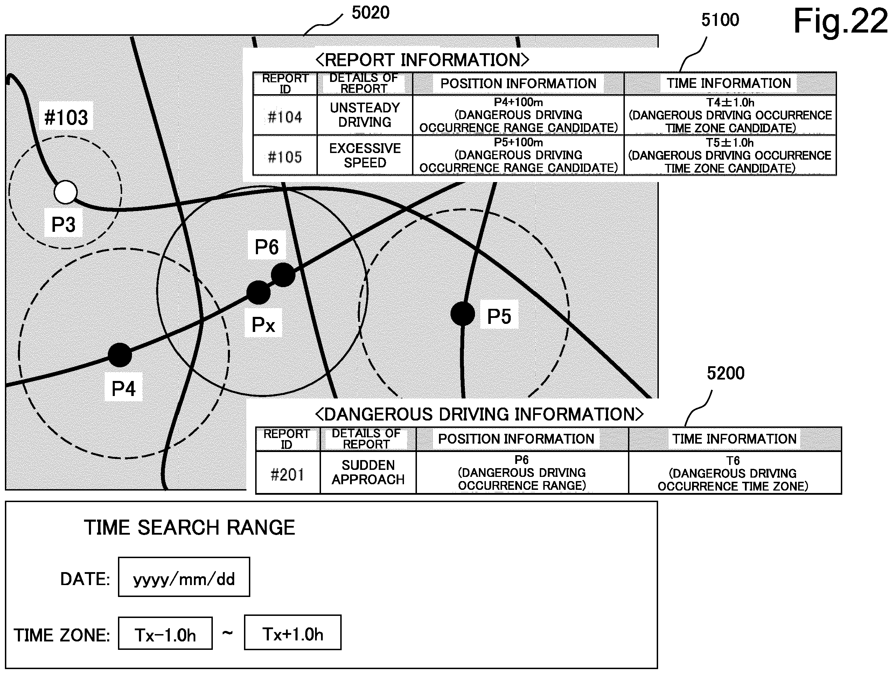

Returning to Fig. 19, the search processing unit 101 transmits the search result to the display processing unit 103, and the display processing unit 103 outputs the search result (step S53). Fig. 22 is a diagram illustrating an example of the search result obtained by searching the existing report information and the dangerous driving information in the first example embodiment. A search result 5100 is a result of searching the report information storage unit 104 for the report information. A search result 5200 is a result of searching the dangerous driving information storage unit 105 for the dangerous driving information. A map display 5020 represents report information and dangerous driving information searched in the position search range of the position Px where the resident or the like has reported dangerous driving when the time search range is Tx ± 1.0 h. In the map display 5020 illustrated in Fig. 22, the search range of the position Px includes report information of the position P4 with the report ID "#104" and the position P5 with "#105" and dangerous driving information of the position P6 with "#106". In Fig. 22, the report information and the dangerous driving information that match the search range are represented by black circles (•), and the report information and the dangerous driving information that do not match the search range are represented by a white circle (∘).

In the display of such search results as illustrated in Fig. 22, the search results may be ranked or filtered under a predetermined condition. The predetermined condition is, for example, a report date and time, details of a report (dangerous driving type), a distance from a search position (position of the center of the search range), and the like.

By displaying the dangerous driving information detected based on the sensor information in addition to the report information from the resident or the like by the search process with the dangerous driving information, it is possible to easily compare which information the search result corresponds to, and the like.

In the present example embodiment, the report information and the dangerous driving information are searched using the position search range and the time search range as the search range, but the search range is not limited thereto. The search range may include information (hereinafter, also referred to as vehicle search range) regarding the type of the dangerous driving and a vehicle. In a case where the dangerous driving type and vehicle information are included in the inspection range, the search processing unit 101 may search the report information and the dangerous driving information using these. For example, in a case where vehicle information such as a dangerous driving type, a vehicle type, and a number is reported from a resident or the like, the search processing unit 101 may include the vehicle search range in the search range.

In a case where a report regarding dangerous driving is registered by a resident or the like (the other registration process described above), the resident or the like may be allowed to register an image recorded by a drive recorder installed in a vehicle to be driven, for example, in addition to details of a report, a reported position, and a reported time. In this case, the image recorded by the registered drive recorder, for example, may be detected dangerous driving by a device that determines a driving situation by image analysis and detects dangerous driving, such as the dangerous driving detection device 30. To detect the dangerous driving, for example, vehicle information such as a vehicle type and a number as illustrated in Fig. 3 may be used. As a result, the person in charge can check the report from the resident or the like while viewing the image.

### (Effects of First Example Embodiment)

According to the information management device 10 according to the first example embodiment, it is possible to efficiently manage reports of dangerous driving from residents and the like in the driving situation management. The reason is that the report information storage unit 104 stores report information in which details of a report indicating a dangerous driving situation are associated with position information including at least one of a dangerous driving occurrence range candidate indicating an approximate range of a position where the dangerous driving situation occurred and a dangerous driving occurrence range indicating a range in which the dangerous driving occurrence range candidate has been identified, and time information including at least one of a dangerous driving occurrence time zone candidate indicating an approximate range of a time when the dangerous driving situation occurred and a dangerous driving occurrence time zone indicating a range in which the dangerous driving occurrence time zone candidate has been identified. This is because the search processing unit 101 searches the report information storage unit 104 for the report information including the position information and the time information in the search range to be searched, and the display processing unit 103 outputs the search result.

This is because the registration processing unit 102 registers, in the report information storage unit 104, user report information in which details of a report are associated with position information including at least one of a dangerous driving occurrence range candidate and a dangerous driving occurrence range and time information including at least one of a dangerous driving occurrence time zone candidate and a dangerous driving occurrence time zone based on an input from a user (a person in charge, a resident, or the like).

### [Second Example Embodiment]

An information management device according to a second example embodiment will be described with reference to the drawings. The information management device 11 according to the second example embodiment is communicably connected to a communication terminal 40 via a network 50 similarly to the information management device 10 according to the first example embodiment. The information management device 11 is connected to a display device 20 and a dangerous driving detection device 30.

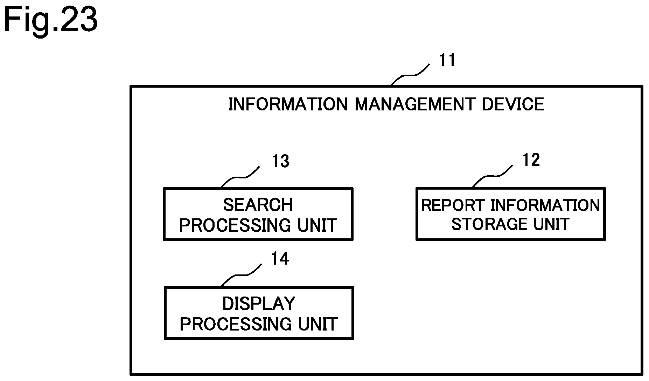

Fig. 23 is a block diagram illustrating an example of a configuration of the information management device 11 according to the second example embodiment. The information management device 11 includes a report information storage unit 12, a search processing unit 13, and a display processing unit 14. The configuration of the information management device 11 according to the second example embodiment is a configuration in which the registration processing unit 102 and the dangerous driving information storage unit 105 are omitted from the information management device 10 according to the first example embodiment. The report information storage unit 12, the search processing unit 13, and the display processing unit 14 are aspects of storage means, search processing means, and display processing means, respectively.

The report information storage unit 12 stores report information in which details of a report indicating a dangerous driving situation are associated with position information including at least one of a dangerous driving occurrence range candidate indicating an approximate range of a position where the dangerous driving situation occurred and a dangerous driving occurrence range indicating a range in which the dangerous driving occurrence range candidate has been identified. The search processing unit 13 searches the report information storage unit 12 for report information including position information in a search range indicating a predetermined range to be searched. The display processing unit 14 outputs a search result.

### (Effects of Second Example Embodiment)

According to the information management device 11 according to the second example embodiment, it is possible to efficiently manage reports of dangerous driving from residents and the like in the driving situation management. The reason is that the report information storage unit 12 stores report information in which details of a report indicating a dangerous driving situation are associated with position information including at least one of a dangerous driving occurrence range candidate indicating an approximate range of a position where the dangerous driving situation occurred and a dangerous driving occurrence range indicating a range where the dangerous driving occurrence range candidate has been identified. This is because the search processing unit 13 searches the report information storage unit 12 for report information including the position information in a search range indicating a predetermined range as a search target, and the display processing unit 14 outputs the search result.

### (Hardware Configuration)

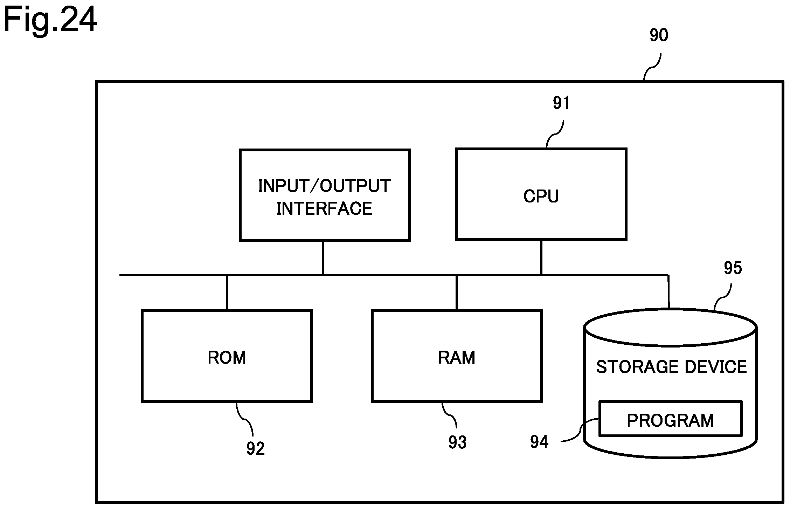

Fig. 24 is a block diagram illustrating an example of a hardware configuration of a computer. The information management devices 10 and 11, the dangerous driving detection device 30, and the communication terminal 40 described above are implemented by executing a program (software program, computer program) in a CPU 91 of the computer 90 illustrated in Fig. 24. Specifically, the functions of the search processing unit 101, the registration processing unit 102, and the display processing unit 103 of the information management device 10 are implemented by executing a program. Any of the functions of the search processing unit 101, the registration processing unit 102, and the display processing unit 103 may be configured by an external device (not illustrated), and the function may be provided from the external device to the information management device 10 via the network 50. The configuration of the information management device 10 may be implemented by the central processing unit (CPU) 91 reading a program 94 from a read only memory (ROM) 92 or a storage device 95 and executing the read program 94 using the CPU 91 and a random access memory (RAM) 93. The present disclosure described using the above-described example embodiments as an example can be regarded as being configured by a code representing a computer program or by a computer-readable storage medium in which the code representing the computer program is stored. The computer-readable storage medium is, for example, the storage device 95, a removable magnetic disk medium (not illustrated), an optical disc medium, a memory card, or the like. The configuration in each example embodiment may be dedicated hardware by an integrated circuit. The information management devices 10 and 11 and the dangerous driving detection device 30 may be configured by a cloud computer.

The present disclosure is not limited to the above-described example embodiments, and various modifications can be made, and embodiments obtained by appropriately combining configurations, operations, and processes disclosed in the different embodiments are also included in the technical scope of the present disclosure.

### Reference Signs List

- 10, 11: Information management device
- 20: Display device
- 30: Dangerous driving detection device
- 40: Communication terminal
- 101: Search processing unit
- 102: Registration processing unit
- 103: Display processing unit
- 104: Report information storage unit
- 105: Dangerous driving information storage unit
- 106: Sensor information storage unit

## Claims

1. An information management device comprising:
storage means configured to store report information in which details of a report indicating a dangerous driving situation are associated with position information including at least one of a dangerous driving occurrence range candidate indicating an approximate range of a position where the dangerous driving situation occurred and a dangerous driving occurrence range indicating a range in which the dangerous driving occurrence range candidate has been identified;
search processing means configured to search the storage means for report information including the position information in a search range as a search target; and
display processing means configured to output a search result.

2. The information management device according to claim 1, wherein
the storage means further stores report information in which time information including at least one of a dangerous driving occurrence time zone candidate indicating an approximate range of a time when the dangerous driving situation occurred and a dangerous driving occurrence time zone indicating a range in which the dangerous driving occurrence time zone candidate has been identified is associated, and
the search processing means searches the storage means for report information in which both the position information and the time information are included in the search range as the search target.

3. The information management device according to claim 2, further comprising:
registration processing means configured to register, in the storage means, report information from a user in which the details of the report are associated with the position information including at least one of the dangerous driving occurrence range candidate and the dangerous driving occurrence range and the time information including at least one of the dangerous driving occurrence time zone candidate and the dangerous driving occurrence time zone based on an input from the user.

4. The information management device according to claim 3, wherein
the registration processing means registers the report information from the user in a case where the position information and the time information in the report information from the user do not overlap the position information and the time information in the report information stored in the storage means.

5. The information management device according to claim 4, wherein
in a case where ranges in which the position information and the time information overlap exceed a threshold, it is determined that the position information and the time information overlap.

6. The information management device according to any one of claims 3 to 5, wherein
the registration processing means updates the dangerous driving occurrence range candidate and the dangerous driving occurrence time zone candidate of the report information to the dangerous driving occurrence range and the dangerous driving occurrence time zone, respectively, based on sensor information indicating a vehicle state acquired from each vehicle.

7. The information management device according to any one of claims 2 to 6, wherein
the storage means further stores dangerous driving information in which a dangerous driving type indicating a type of dangerous driving, position information indicating the dangerous driving occurrence range that is a range in which the dangerous driving occurred, and time information indicating the dangerous driving occurrence time zone that is a time zone in which the dangerous driving occurred are associated with each other, the dangerous driving information being detected based on sensor information indicating a vehicle state acquired from each vehicle, and
the search processing means searches the storage means for the dangerous driving information in addition to the report information.

8. The information management device according to claim 7, wherein
the display processing means displays the dangerous driving information in addition to the report information as a search result of the search processing means.

9. An information management method comprising:
storing report information in which details of a report indicating a dangerous driving situation are associated with position information including at least one of a dangerous driving occurrence range candidate indicating an approximate range of a position where the dangerous driving situation occurred and a dangerous driving occurrence range indicating a range in which the dangerous driving occurrence range candidate has been identified;
searching for report information including the position information in a search range as a search target; and
outputting a search result.

10. A recording medium storing a program for causing a computer to execute:
storing report information in which details of a report indicating a dangerous driving situation are associated with position information including at least one of a dangerous driving occurrence range candidate indicating an approximate range of a position where the dangerous driving situation occurred and a dangerous driving occurrence range indicating a range in which the dangerous driving occurrence range candidate has been identified;
searching for report information including the position information in a search range as a search target; and
outputting a search result.
